# FASCICULE DE BREVET EUROPEEN

(11) **EP 2 697 078 B1**
(45) Date de publication et mention de la délivrance du brevet: **23.09.2015**
(21) Numéro de dépôt: 12715085.2
(22) Date de dépôt: 12.04.2012
(51) Int. Cl.: B60C 5/00, B60C 7/00

(54) **PNEUMATIQUE POUR VEHICULE DE MANUTENTION**
REIFEN FÜR EIN FÖRDERFAHRZEUG
TIRE FOR A HANDLING VEHICLE

(30) Priorité: 14.04.2011 FR 1153247
(43) Date de publication de la demande: 19.02.2014
(73) Titulaire: Compagnie Générale des Etablissements Michelin, 63000 Clermont-Ferrand (FR); Michelin Recherche et Technique S.A., 1763 Granges-Paccot (CH)
(72) Inventeur: FERLIN, Olivier, F-63040 Clermont-Ferrand Cedex 9 (FR); BOR, Gérard, F-63040 Clermont-Ferrand Cedex 9 (FR)
(74) Mandataire: Le Cam, Stéphane Georges Elie
(86) Numéro de dépôt international: PCT/EP2012/056650
(87) Numéro de publication internationale: WO 2012/140121

(56) Documents cités:
- CN-Y- 2 616 410
- US-A- 1 097 824

## Description

La présente invention concerne un pneumatique pour un véhicule de manutention, destiné à transporter des charges lourdes, sur de petites distances et à faibles vitesses, tel que, par exemple, un véhicule de manutention de matériaux utilisé dans une mine souterraine. Elle concerne plus précisément un ensemble monté, constitué d'un pneumatique monté sur une jante.

L'invention a également pour objet un procédé de réalisation d'un tel ensemble monté.

Les véhicules de manutention sont souvent équipés de bandages pleins à la place de pneumatiques gonflés traditionnels. Un bandage plein est un objet de forme toroïdale, le plus souvent en caoutchouc, destiné à être monté sur une roue, mais sans cavité interne destinée à être gonflée par un gaz de gonflage. La charge appliquée au bandage plein est supportée par la structure du bandage plein.

Un bandage plein présente un certain nombre d'avantages par rapport à un pneumatique gonflé. Tout d'abord, du fait de l'absence de gaz de gonflage, il ne peut ni se dégonfler, ni éclater, ce qui garantit un avantage en termes de fiabilité et de sécurité. Ensuite, un bandage plein, en raison de sa capacité d'amortissement plus élevée que celle d'un pneumatique gonflé, contribue à une meilleure stabilité dynamique du véhicule de manutention, lors des opérations de chargement et de déchargement qui entraînent des transferts de charges en dynamique entre les essieux avant et arrière du véhicule. De plus, un bandage plein a une capacité de charge importante, du fait de sa rigidité verticale élevée, et un encombrement réduit par rapport à un pneumatique gonflé ayant la même capacité de charge. Enfin, un bandage plein nécessite une maintenance réduite: en raison de l'absence de gaz de gonflage, il n'y a pas de pression à vérifier.

En revanche, un bandage plein présente certains inconvénients par rapport à un pneumatique gonflé ayant la même capacité de charge. Tout d'abord, un bandage plein a une masse plus élevée, du fait de sa structure massive. Par ailleurs, sa structure massive dissipe davantage de chaleur, en utilisation sous l'action des sollicitations mécaniques, ce qui implique des contraintes d'usage en charge, vitesse et durée d'utilisation. Sa durée de vie en usure est inférieure à celle d'un pneumatique gonflé, car la répartition des pressions au sol, dans la surface de contact avec le sol de la bande de roulement du bandage plein, est moins optimisée. Son coût de fabrication est plus élevé, en raison d'un volume de matière supérieur. Son impact environnemental est important, car un bandage plein usé, en fin de vie, constitue un déchet massif et volumineux, plus difficile à recycler. Enfin, le montage d'un bandage plein sur une jante peut nécessiter un matériel de montage spécifique, indispensable pour assurer un serrage sur la jante suffisant pour assurer une transmission efficace du couple.

Un pneumatique traditionnel comprend une bande de roulement destinée à entrer en contact avec un sol, deux flancs s'étendant radialement vers l'intérieur depuis les extrémités de la bande de roulement, deux bourrelets prolongeant les flancs radialement vers l'intérieur et en contact avec une jante. Lorsqu'il est monté sur une jante pour constituer un ensemble monté, la bande de roulement, les deux flancs, les deux bourrelets et la jante délimitent une cavité interne.

Un pneumatique traditionnel, dont la cavité interne est au moins en partie remplie par un composant de remplissage solide, est une alternative intéressante au bandage plein. Diverses solutions techniques de ce type ont été proposées.

Une première famille de solutions techniques est basée sur un remplissage de la cavité interne du pneumatique par des couches concentriques de matériaux polymériques. Les documents WO 9703850 et US 6578613 décrivent un pneumatique dont la cavité interne est remplie par un composant de remplissage solide, constitué de couches concentriques de matériau polymérique comprenant éventuellement des joints d'expansion. Le document US 7678216 présente un pneumatique dont la cavité interne contient un coeur en matériau solide enveloppé par une mousse élastomérique.

Une deuxième famille de solutions techniques est basée sur un remplissage de la cavité interne du pneumatique par un matériau de type mousse polymérique comprenant des vides ou cellules. Les documents US 3022810, US 3381735, US 3866652, US 3907018 et US 4060578 décrivent des pneumatiques dont la cavité interne est remplie par un matériau en mousse élastomérique cellulaire, dont les cellules contiennent éventuellement un gaz sous pression.

Une troisième famille de solutions techniques est basée sur un remplissage de la cavité interne du pneumatique par des particules de caoutchouc mélangées à un agent de liaison, avant introduction dans le pneumatique, le mélange étant destiné à durcir, en particulier par vulcanisation, pour former un composant de remplissage solide monobloc. Le document US 1097824 divulgue un pneumatique dont la cavité interne est remplie de particules solides élastiques, telles que des particules de caoutchouc vulcanisé, liées entre elles de façon permanente par un matériau de liaison, tel qu'un ciment en caoutchouc vulcanisé. Le document JP 57058501 décrit un bandage plein, réalisé à partir d'un pneumatique rempli d'un mélange vulcanisé de poudre de caoutchouc et de polyuréthane liquide. Les documents JP 2001252989 et JP 04088168 décrivent des procédés de fabrication d'un bandage plein à partir d'un pneumatique traditionnel par remplissage de ce dernier par de la poudre de caoutchouc recyclé, mélangée, avant introduction dans le pneumatique, à un agent de liaison, tel que, par exemple, une résine polyuréthane ou phénol, le mélange ainsi constitué étant durci, à l'intérieur du pneumatique, pour former un composant de remplissage monobloc.

Les précédentes solutions techniques décrivent toutes un composant de remplissage solide de la cavité interne du pneumatique, constitué soit d'un élément monobloc, tel qu'une mousse polymérique cellulaire ou un mélange vulcanisé de particules de caoutchouc, soit d'un nombre limité d'éléments, tels que des couches concentriques de matériau polymérique. La conception et la fabrication de tels composants de remplissage solide présentent toutefois une certaine complexité.

Par ailleurs, le composant de remplissage solide a une rigidité mécanique qui contribue, avec la rigidité structurelle du pneumatique seul, à la rigidité verticale du pneumatique rempli par le composant de remplissage. Le choix de la rigidité du composant de remplissage solide permet d'ajuster la rigidité verticale du pneumatique rempli par le composant de remplissage solide, donc la flèche relative du pneumatique, pour une charge verticale donnée appliquée sur le pneumatique, au niveau souhaité. La flèche relative du pneumatique est définie par le rapport de la variation de la hauteur radiale du pneumatique sur la moitié de la différence entre le diamètre extérieur du pneumatique et le diamètre maximum de la jante mesuré sur le rebord de jante, le diamètre extérieur du pneumatique étant mesuré en statique dans un état non chargé.

Après ajustement de la rigidité du composant de remplissage solide afin d'obtenir la rigidité verticale souhaitée du pneumatique, il est difficile de la modifier, par exemple dans l'hypothèse d'une variation significative de la charge verticale appliquée au pneumatique, sans changer intégralement le composant de remplissage solide.

L'invention a pour objectif de proposer un composant de remplissage de mise en oeuvre aisée, pour un pneumatique d'un ensemble monté d'un véhicule de manutention, destiné à transporter des charges lourdes, sur de petites distances et à faibles vitesses, et de permettre un ajustement plus facile de la rigidité verticale du pneumatique par un ajustement de la rigidité du composant de remplissage.

Cet objectif a été atteint par un ensemble monté pour un véhicule de manutention, destiné à transporter des charges lourdes, sur de petites distances et à faibles vitesses, comprenant:
- un pneumatique monté sur une jante,
- le pneumatique comprenant une bande de roulement destinée à entrer en contact avec un sol, deux flancs s'étendant radialement vers l'intérieur depuis les extrémités de la bande de roulement, deux bourrelets prolongeant les flancs radialement vers l'intérieur et en contact avec la jante,
- la bande de roulement, les deux flancs, les deux bourrelets et la jante délimitant une cavité interne,
- la cavité interne contenant un composant de remplissage constitué d'au moins un élément solide incompressible,
   le composant de remplissage étant un composant de remplissage granulaire, constitué de granulats au moins en partie séparés les uns des autres par des interstices contenant au moins un gaz,
   le taux de remplissage, qui est le rapport entre le volume total des granulats, somme des volumes élémentaires des granulats, et le volume de la cavité interne, étant au moins égal à 0,8.

Un composant de remplissage, par définition, est destiné à remplir au moins en partie la cavité interne du pneumatique. Un composant de remplissage granulaire est constitué de granulats qui sont des particules de petite taille, constituées d'un matériau incompressible, et mobiles les unes par rapport aux autres. Une particule de petite taille a un volume élémentaire très inférieur au volume de la cavité interne du pneumatique, au plus égal à 10⁻⁴ fois le volume de la cavité interne et au moins égal à 10⁻⁷ fois le volume de la cavité interne. A titre d'exemple, pour une cavité interne dont le volume est égal à 40.10⁻³ m³, un volume élémentaire de granulat de 1 cm³ est égal à 0,25. 10⁻⁴ fois le volume de la cavité interne et un volume élémentaire de granulat de 1 mm³ est égal à 0,25. 10⁻⁷ fois le volume de la cavité interne. Un matériau incompressible, qui, par définition, a un volume non diminué par une augmentation de la pression, peut être soit souple, tel que du caoutchouc, ou rigide, tel que du sable.

Les granulats sont au moins en partie séparés les uns des autres par des interstices contenant au moins un gaz. Du fait de sa forme, un granulat est en contact sur une partie seulement de sa surface extérieure avec les granulats adjacents, d'où l'existence d'interstices entre les granulats. Lors du remplissage de la cavité interne du pneumatique par les granulats, de l'air atmosphérique est piégé dans les interstices entre les granulats. Par ailleurs, il est également envisageable de gonfler le pneumatique après remplissage de la cavité interne du pneumatique par les granulats, le gaz de gonflage se répartissant alors dans les interstices et ayant une pression supérieure à la pression atmosphérique, par exemple, la pression d'utilisation du pneumatique, telle que recommandée par les normes de l'ETRTO (European Tyre and Rim Technical Organisation).

Le volume de la cavité interne d'un pneumatique étant sensiblement constant, dans les conditions d'usage du pneumatique, les inventeurs ont montré qu'un taux de remplissage, défini comme le rapport entre le volume total des granulats, somme des volumes élémentaires des granulats, et le volume de la cavité interne, au moins égal à 0,8 garantit une rigidité verticale du pneumatique, avec composant de remplissage granulaire, au moins égale à la rigidité verticale du même pneumatique, sans composant de remplissage granulaire, et gonflé à la pression d'utilisation du pneumatique pour une charge d'utilisation donnée.

Un taux de remplissage inférieur à 0,8 conduit à une rigidité verticale trop faible pour un fonctionnement optimal du pneumatique, similaire à celle d'un pneumatique insuffisamment gonflé.

Le taux de remplissage est obtenu par compactage des granulats à l'intérieur de la cavité interne du pneumatique. Le compactage consiste à exercer une pression sur le composant de remplissage granulaire de façon à réduire le volume des interstices entre les granulats. Plus le volume élémentaire de granulat est faible, plus le volume des interstices entre les granulats est faible et moins il est nécessaire de compacter le composant de remplissage granulaire pour atteindre le taux de remplissage visé.

Un pneumatique, dont la cavité interne est remplie par un composant de remplissage granulaire, et soumis à des sollicitations mécaniques de roulage, a un comportement mécanique différent de celui d'un bandage plein ou d'un pneumatique dont la cavité interne est remplie par un composant de remplissage solide, et de celui d'un pneumatique gonflé traditionnel.

Dans le cas d'un bandage plein ou d'un pneumatique avec un composant de remplissage solide, la charge verticale appliquée au pneumatique est reprise par compression solide du bandage plein ou du composant de remplissage solide. L'évolution de la charge appliquée au pneumatique en fonction de la flèche du pneumatique est sensiblement linéaire.

Dans le cas d'un pneumatique gonflé traditionnel, la charge verticale appliquée au pneumatique est reprise par la structure du pneumatique et le gaz de gonflage. La rigidité verticale du pneumatique résulte donc de la rigidité structurelle du pneumatique et de la rigidité pneumatique due au gaz de gonflage. L'évolution de la charge appliquée au pneumatique en fonction de la flèche du pneumatique est sensiblement linéaire, mais, le plus souvent, avec une pente plus faible que dans le cas d'un bandage plein plus rigide.

Dans le cas d'un pneumatique avec un composant de remplissage granulaire, la charge verticale appliquée au pneumatique est reprise par la compression du composant de remplissage granulaire, qui est fonction du taux de remplissage de la cavité interne du pneumatique. Plus le taux de remplissage est élevé, moins le volume du composant de remplissage granulaire est compressible. L'évolution de la charge appliquée au pneumatique en fonction de la flèche du pneumatique est fortement non linéaire. Pour les faibles charges, la flèche augmente rapidement du fait du tassement du composant de remplissage granulaire en roulage, fonction du volume élémentaire des granulats et du taux de remplissage. A plus fortes charges, la variation de flèche diminue fortement du fait de l'incompressibilité du matériau constitutif des granulats du composant de remplissage granulaire fortement tassé, le comportement mécanique du pneumatique tendant vers celui d'un bandage plein.

Le comportement d'un pneumatique avec un composant de remplissage granulaire résulte notamment, mais de façon non exhaustive, des caractéristiques d'incompressibilité des granulats, de la faible résistance au cisaillement du composant de remplissage granulaire et de divers phénomènes complexes spécifiques des milieux granulaires, tels que la friction ou la coalescence entre les grains.

Un composant de remplissage granulaire est avantageusement homogène, c'est-à-dire composé de granulats de même matériau et de tailles voisines. Par tailles voisines, on entend des volumes élémentaires de granulats variant entre un volume élémentaire minimal et un volume élémentaire maximal proche, par exemple au plus égal à 1.2 fois le volume élémentaire minimal.

Les granulats du composant de remplissage granulaire sont de préférence constitués de matériaux économiques. Des granulats en matériau souple économique sont, par exemple, issus du recyclage par déchiquetage et broyage de bandes de roulement en caoutchouc de pneumatiques. Des granulats en matériau rigide économique sont, par exemple, des grains de sable.

Le taux de remplissage est avantageusement au moins égal à 0,95. Ce taux de remplissage élevé caractérise un pneumatique dont la cavité interne est parfaitement remplie. Ce remplissage parfait garantit une rigidité du composant de remplissage granulaire même pour de faibles charges. A contrario, si le pneu n'est pas parfaitement rempli, la rigidité verticale à l'origine est très faible, comme dans le cas d'un pneumatique non gonflé.

Selon un premier mode de réalisation, les granulats du composant de remplissage granulaire sont avantageusement élastiques. Dès que la charge n'est plus appliquée au pneumatique, le composant de remplissage granulaire retrouve ainsi sa forme initiale, ce qui garantit la stabilité de la forme du pneumatique dans le temps.

Selon une première variante du premier mode de réalisation, le matériau élastique constitutif des granulats du composant de remplissage granulaire a avantageusement un module d'élasticité à 10% d'allongement, au plus égal à 100 MPa, caractéristique d'un matériau fortement déformable, tel que, par exemple, un matériau polymérique à base d'élastomères. Par définition, le module d'élasticité à 10% d'allongement est la contrainte de traction mesurée pour un allongement de 10% d'une éprouvette dudit matériau. Dans le cas d'un matériau polymérique à base d'élastomères, les caractéristiques de contrainte en fonction de la déformation en traction dudit matériau, après cuisson, sont déterminées par des essais de traction, sur une éprouvette, selon une méthode connue de l'homme du métier, par exemple conformément à la norme internationale ISO 37, et dans les conditions normales de température (23 + ou - 2°C) et d'hygrométrie (50 + ou -5% d'humidité relative), définies par la norme internationale ISO 471.

Selon une deuxième variante préférée du premier mode de réalisation, il est avantageux de choisir, parmi les matériaux élastiques, des granulats constitués d'un matériau polymérique, et, de préférence, un matériau polymérique à base d'élastomères. Il est en effet intéressant, d'un point de vue économique et environnemental, d'utiliser comme matériaux, des gommes recyclées issues des pneumatiques qui sont des matériaux polymériques à base d'élastomères, telles que de la poudre de rechapage ou des pneumatiques broyés partiellement ou totalement. La poudre de rechapage est obtenue par broyage de bandes de roulement de pneumatique issues du rechapage. On peut, le cas échéant, utiliser un matériau polymérique à base d'élastomères spécifiquement conçu pour un usage en tant que granulats, par exemple, avec un niveau d'hystérèse le plus bas possible, pour limiter la dissipation de chaleur dans les granulats.

Selon une troisième variante du premier mode de réalisation, les interstices entre les granulats contiennent une poudre conductrice de chaleur, ayant préférentiellement une conductivité thermique au moins égale 50 W/m.K. Cette poudre conductrice de chaleur permet de répartir la chaleur dissipée dans le composant de remplissage granulaire. En effet, les granulats, en raison de leurs contacts frottants, entre eux et avec la paroi de la cavité interne, dissipent de la chaleur ou énergie calorifique. De plus, les déformations des granulats génèrent également de la chaleur. Ceci évite ainsi la création de points chauds susceptibles de dégrader les granulats et donc la rigidité du composant de remplissage granulaire.

Dans une quatrième variante du premier mode de réalisation, les interstices entre les granulats contiennent avantageusement une poudre coopérant avec les granulats, pour créer des liaisons chimiques permettant de limiter la mobilité relative des granulats entre eux. Ces liaisons chimiques sont créées par élévation de la température à l'intérieur du composant de remplissage granulaire, générée par les sollicitations mécaniques exercées sur le pneumatique, lors de son utilisation en roulage.

Enfin, dans une cinquième variante du premier mode de réalisation, il est avantageux que les interstices entre les granulats contiennent un produit visqueux ayant une viscosité élevée. La viscosité du produit doit être suffisamment faible pour que celui-ci soit en phase fluide, lors de son introduction dans le composant de remplissage granulaire, via la valve de jante de l'ensemble monté. Mais cette viscosité doit être suffisamment élevée pour que le produit ne s'écoule pas, après son introduction, à l'extérieur de la jante, dans le cas d'une jante non étanche. Ce produit visqueux permet d'ajuster la rigidité la rigidité du pneumatique après mise en place du complément de remplissage granulaire dans la cavité interne du pneumatique. De plus, il est envisageable d'utiliser un produit visqueux qui se solidifie dans le composant de remplissage granulaire en créant au moins localement des agglomérats de granulats, ce qui contribue encore à l'augmentation de la rigidité du pneumatique.

Dans un deuxième mode de réalisation, les granulats du composant de remplissage granulaire sont constitués d'un matériau indéformable. Du fait de leur indéformabilité, les granulats indéformables ou rigides ne génèrent pas intrinsèquement de chaleur. De plus, le composant de remplissage granulaire, constitué de granulats indéformables, après une phase de stabilisation du compactage des granulats, garde avantageusement un volume constant au cours de l'utilisation, ce qui évite de faire des compléments de remplissage de la cavité interne pendant la durée de vie du pneumatique. Une grande variété de matériaux indéformables est envisageable, tels que, à titre d'exemple et de façon non exhaustive, des minéraux, comme le sable, ou du verre.

Une variante préférée du deuxième mode de réalisation est de choisir comme granulats des grains de sable. Le sable, qui est un matériau économique, existe sous la forme de diverses granulométries, c'est-à-dire avec diverses tailles de grains. Le choix d'une granulométrie adaptée permet de régler plus facilement le taux de remplissage en fonction de la rigidité verticale de pneumatique visée.

Lors du remplissage de la cavité interne du pneumatique, de l'air atmosphérique est naturellement piégé dans les interstices entre les granulats. Dans le cas particulier d'une jante étanche, il est avantageux, selon un troisième mode de réalisation de l'invention, de gonfler le pneumatique avec un gaz de gonflage tel que l'air ou l'azote, de telle sorte que les interstices entre les granulats sont remplis par un gaz, dont la pression est supérieure à la pression atmosphérique. Il existe en effet deux types de jantes : les jantes de type « tube type », nécessitant l'utilisation d'une chambre à air dans le pneumatique pour assurer l'étanchéité de l'ensemble monté, et les jantes « tubeless » qui garantissent l'étanchéité sans nécessiter de chambre à air. Par conception, une jante « tube type » est donc non étanche, alors qu'une jante « tubeless » est étanche. Dans le cas des ensembles montés pour véhicules de manutention, l'absence fréquente de chambres à air amène à distinguer les deux types de jante pour le choix du composant de remplissage. Par conséquent, un ensemble monté, sans chambre à air, ne peut être gonflé que dans le cas d'une jante tubeless.

Les inventeurs ont par ailleurs constaté qu'un pneumatique, dont la cavité interne est remplie par un composant de remplissage granulaire et est gonflée par un gaz de gonflage à une pression donnée, a une rigidité verticale sensiblement égale à celle du pneumatique, sans composant de remplissage et gonflé à cette même pression, en deçà d'une certaine charge, et une rigidité verticale sensiblement égale à celle d'un bandage plein, au-delà de cette charge. En d'autres termes, un tel pneumatique se comporte comme un pneumatique traditionnel gonflé aux faibles charges et comme un bandage plein aux fortes charges.

Une telle évolution de rigidité peut avoir un intérêt particulier pour des usages dans lesquels on distingue une charge dynamique de roulage et une charge statique de manoeuvre, comme dans le cas des grues et, plus généralement, des engins de levage. La rigidité verticale du pneumatique, avec composant de remplissage granulaire, est ainsi ajustée à l'aide du taux de remplissage et de la pression de gonflage, de façon à ce que le pneumatique se comporte comme un pneumatique gonflé traditionnel en phase de roulage à vide et comme un bandage plein en phase de manoeuvre de levage de charge.

Selon un quatrième mode de réalisation de l'invention, les interstices entre les granulats contiennent un liquide, permettant de répartir la chaleur dissipée dans le composant de remplissage granulaire par brassage des granulats en utilisation. L'utilisation d'un liquide n'est envisageable que dans le cas d'une jante étanche. Le liquide contenu dans les interstices peut également s'intercaler entre les granulats, dans les zones de contact inter granulaires, en fonction des pressions de contact entre les granulats. Dans les interstices entre granulats, une phase gazeuse peut coexister avec la phase liquide.

La fonction de ce liquide est double. Le liquide a une première fonction de répartition de la chaleur dans le composant de remplissage granulaire, lors du brassage des granulats en utilisation, c'est-à-dire lors des mouvements relatifs des grains lorsque le pneumatique roule. La deuxième fonction du liquide est d'assurer une lubrification entre les grains pour réduire le frottement inter granulaire et, par conséquent, la chaleur générée par frottement.

Le choix du liquide peut privilégier l'une ou l'autre des fonctions. L'eau ou, plus généralement une solution aqueuse susceptible de rester en phase liquide dans tout le domaine de températures d'utilisation du pneumatique, est un exemple de fluide caloporteur efficace sur le plan de la répartition de chaleur. Un liquide lubrifiant, tel qu'une huile, favorise les glissements inter granulaires et, par conséquent, limite la dissipation d'énergie par frottement

L'invention concerne également un procédé de fabrication d'un ensemble monté, constitué d'un pneumatique, dont la cavité interne est remplie par un composant de remplissage granulaire, et d'une jante.

Le procédé de réalisation d'un tel ensemble monté comprend les étapes suivantes:
a) Mise en place d'une virole cylindrique de diamètre égal au diamètre de la jante, de façon à obturer la cavité interne du pneumatique, remplissage de la cavité interne du pneumatique par le composant de remplissage granulaire à l'aide d'un moyen de remplissage, et compactage des granulats, de façon à obtenir le taux de remplissage visé et à constituer un ensemble intermédiaire comprenant le pneumatique, rempli par le composant de remplissage granulaire, et la virole.
b) Mise en place de l'ensemble intermédiaire sur un bâti de transfert comprenant un moyen de transfert et la jante sur laquelle doit être monté le pneumatique, rempli par le composant de remplissage granulaire.
c) Transfert du pneumatique, rempli par le composant de remplissage granulaire, de la virole sur la jante, par application d'un effort parallèle à l'axe de révolution du pneumatique par le moyen de transfert, de façon à constituer l'ensemble monté.

Dans une première étape, on met en place une virole cylindrique de diamètre égal au diamètre de la jante, de façon à obturer la cavité interne du pneumatique. Le diamètre de la jante est le diamètre au seat, c'est-à-dire le diamètre de la partie de jante en contact avec les parties radialement intérieures du pneumatique. L'emploi d'une virole cylindrique de diamètre égal au diamètre de la jante permet d'obtenir le taux de remplissage visé.

A l'aide d'un moyen de remplissage approprié, par exemple de type pompe, on remplit la cavité interne du pneumatique par le composant de remplissage granulaire, à travers la virole cylindrique.

On réalise le compactage des granulats avec un moyen adapté, exerçant une pression sur le composant de remplissage granulaire, par exemple un piston. Ce compactage, fonction de la nature et de la taille des granulats, permet d'obtenir le taux de remplissage visé.

Après remplissage et compactage on obtient ainsi un ensemble intermédiaire comprenant le pneumatique, rempli par le composant de remplissage granulaire, et la virole.

La deuxième étape consiste en la mise en place de l'ensemble intermédiaire sur un bâti de transfert comprenant un moyen de transfert et la jante. L'ensemble intermédiaire est positionné de façon à ce que la virole cylindrique soit coaxiale avec la jante sur laquelle doit être monté le pneumatique, rempli par le composant de remplissage granulaire. Un moyen de transfert est, par exemple, une structure annulaire, exerçant sur le pneumatique un effort parallèle à l'axe de révolution du pneumatique, de façon à le transférer de la virole sur sa jante.

La troisième et dernière étape est le transfert du pneumatique, rempli par le composant de remplissage granulaire, de la virole sur la jante, par application d'un effort parallèle à l'axe de rotation du pneumatique par le moyen de transfert, de façon à constituer l'ensemble monté.

L'avantage de réaliser un ensemble intermédiaire, constitué d'un pneumatique monté sur une virole cylindrique, est de découpler les moyens de remplissage et les moyens de transfert sur jante. Ceci permet une souplesse dans la réalisation d'ensembles montés selon l'invention: plusieurs ensembles intermédiaires peuvent être réalisés en parallèle et stockés, avant d'être transférés sur le moyen de transfert, pour monter les pneumatiques sur leurs jantes.

Ce procédé concerne la réalisation d'un ensemble monté avec un composant de remplissage granulaire simple sans ajout d'un composant supplémentaire tel que précédemment décrit : poudre, gaz de gonflage, liquide.

Les caractéristiques de l'invention seront mieux comprises à l'aide de la description des figures annexées 1 à 3C:
- la figure 1A présente une vue en coupe dans un plan méridien d'un ensemble monté constitué d'un pneumatique, dont la cavité interne est remplie par un composant de remplissage granulaire, monté sur une jante.
- la figure 1B présente une vue agrandie du composant de remplissage granulaire.
- la figure 2 présente des courbes d'évolution de la charge en fonction de la flèche d'un pneumatique.
- les figures 3A à 3C présentent les étapes de réalisation d'un ensemble monté selon l'invention.

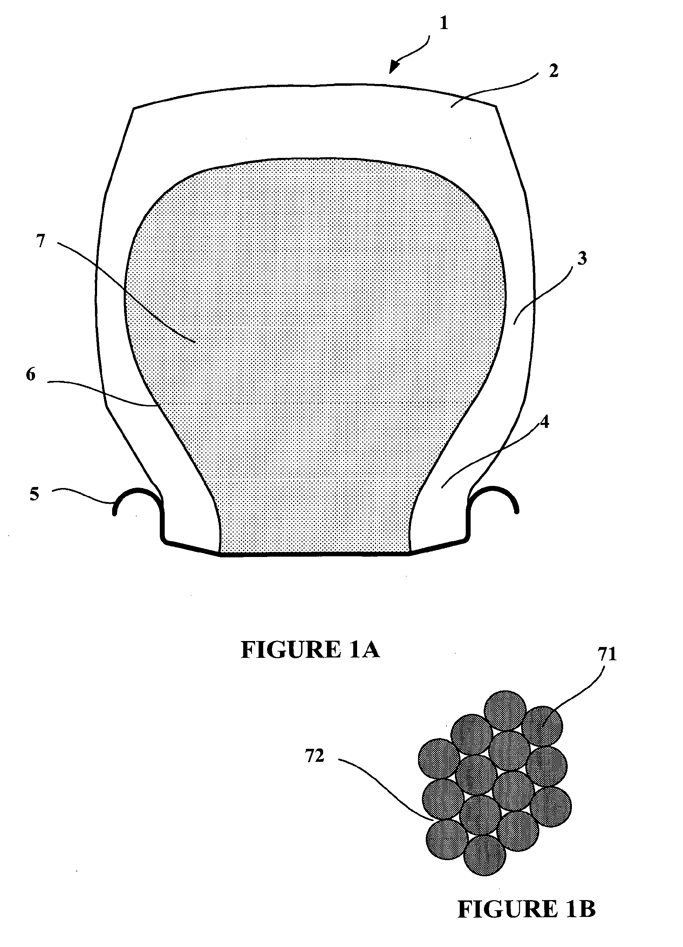

Les figures 1A à 3C ne sont pas représentées à l'échelle pour en faciliter la compréhension.

Sur la figure 1A, est représentée une coupe méridienne d'un pneumatique 1, selon un plan passant par l'axe de révolution du pneumatique, monté sur une jante 5. Le pneumatique 1 comprend une bande de roulement 2 destinée à entrer en contact avec un sol, deux flancs 3 s'étendant radialement vers l'intérieur depuis les extrémités de la bande de roulement 2, deux bourrelets 4 prolongeant les flancs 3 radialement vers l'intérieur et en contact avec la jante 5. La bande de roulement 2, les deux flancs 3, les deux bourrelets 4 et la jante 5 délimitent une cavité interne 6. La cavité interne 6 contient un composant de remplissage granulaire 7, constitué de granulats.

La figure 1B est une vue agrandie du composant de remplissage granulaire. Les granulats 71 sont séparés par des interstices 72, contenant au moins un gaz.

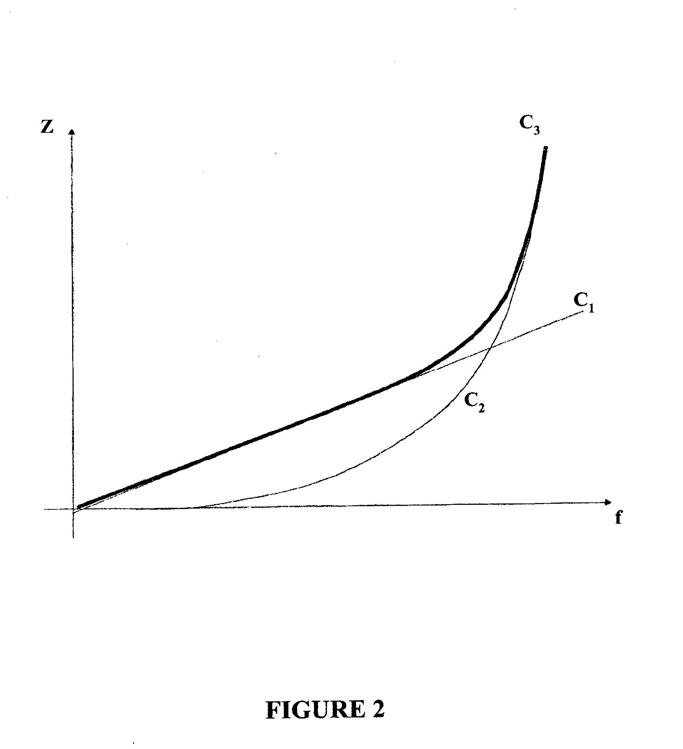

La figure 2 présente trois courbes C₁, C₂ et C₃ d'évolution de la charge Z appliquée à un pneumatique en fonction de la flèche f du pneumatique. La pente de la droite tangente à une courbe C, en un point (Z, f), définit la rigidité verticale du pneumatique en ce point. La courbe C₁ représente l'évolution de la charge Z en fonction de la flèche f pour un pneumatique, sans composant de remplissage granulaire et gonflé à une pression P. La courbe C₂ représente l'évolution de la charge Z en fonction de la flèche f pour un pneumatique, avec composant de remplissage granulaire mais non gonflé. La courbe C₃ représente l'évolution de la charge Z en fonction de la flèche f pour un pneumatique, avec composant de remplissage granulaire et gonflé à la même pression P que celle de la courbe C₁. La courbe C₃ est confondue avec la courbe C₁, caractéristique d'un pneumatique traditionnel gonflé, pour des valeurs de charge inférieure à une valeur de transition, puis, après une zone de transition, est confondue avec la courbe C₂, caractéristique d'un bandage plein.

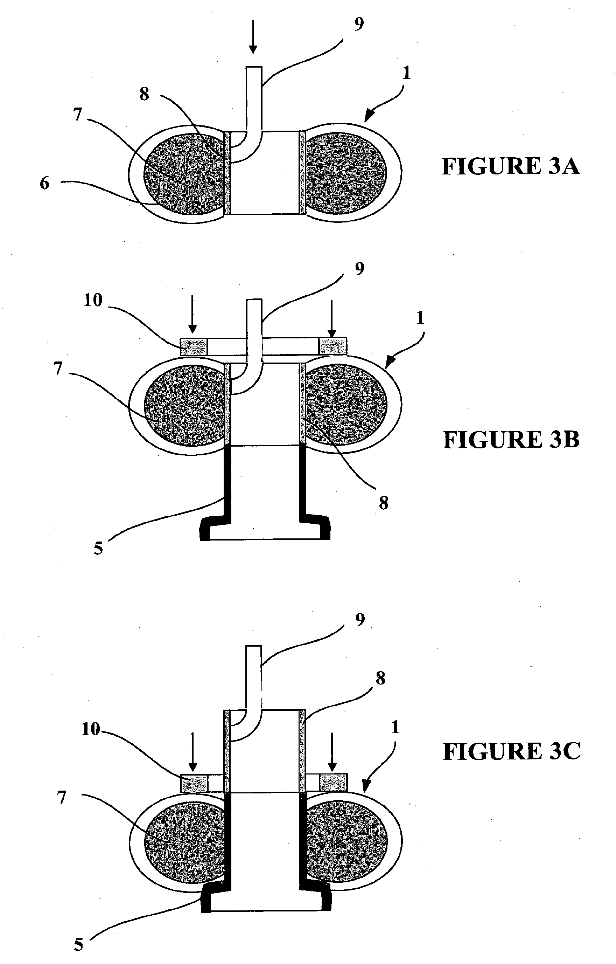

Les figures 3A à 3C schématisent les étapes du procédé de réalisation d'un ensemble monté selon l'invention.

La figure 3A représente la première étape du procédé. Une virole cylindrique 8 de diamètre égal au diamètre de la jante est mise en place de façon à obturer la cavité interne 6 du pneumatique 1. On réalise alors le remplissage de la cavité interne 6 du pneumatique 1, obturée par la virole cylindrique 8, par le composant de remplissage granulaire 7 à l'aide d'un moyen de remplissage 9 traversant la virole cylindrique 8. On compacte les granulats à l'aide d'un moyen adapté (non représenté), de façon à obtenir le taux de remplissage visé. Le résultat de la deuxième étape est la constitution d'un ensemble intermédiaire (1, 7, 8).

La figure 3B illustre la deuxième étape du procédé qui consiste en la mise en place de l'ensemble intermédiaire (1, 7, 8) sur un bâti de transfert comprenant un moyen de transfert 10 et la jante 5 sur laquelle doit être monté le pneumatique 1.

Enfin, sur la figure 3 C, est illustrée la troisième étape du procédé qui est le transfert du pneumatique 1, rempli par le composant de remplissage granulaire 7, de la virole 8 sur la jante 5, par application d'un effort parallèle à l'axe de révolution du pneumatique par le moyen de transfert 10, de façon à constituer l'ensemble monté (1, 7, 5).

Les inventeurs ont réalisé un ensemble monté selon l'invention, pour une utilisation sur véhicule de manutention, et conformément au procédé de remplissage décrit Le composant de remplissage granulaire utilisé est constitué de granulats de poudre de rechapage, issus du recyclage de bandes de roulement lors du rechapage de pneumatiques. Les interstices entre les granulats de poudrette sont remplis par l'air atmosphérique. Le taux de remplissage obtenu est égal à environ 0.85. Des tests ont été également réalisés selon les divers modes de réalisation décrits: avec de l'air de gonflage à la pression d'utilisation du pneumatique, avec un liquide tel que de l'eau, avec une poudre à base de noir de carbone.

## Revendications

1. Ensemble monté (1, 5, 7) pour un véhicule de manutention, destiné à transporter des charges lourdes, sur de petites distances et à faibles vitesses, comprenant:
- un pneumatique (1) monté sur une jante (5),
- le pneumatique comprenant une bande de roulement (2) destinée à entrer en contact avec un sol, deux flancs (3) s'étendant radialement vers l'intérieur depuis les extrémités de la bande de roulement (2), deux bourrelets (4) prolongeant les flancs (3) radialement vers l'intérieur et en contact avec la jante (5),
- la bande de roulement (2), les deux flancs (3), les deux bourrelets (4) et la jante (5) délimitant une cavité interne (6),
- la cavité interne (6) contenant un composant de remplissage (7) constitué d'au moins un élément solide incompressible,
le composant de remplissage (7) étant un composant de remplissage granulaire, constitué de granulats (71) au moins en partie séparés les uns des autres par des interstices (72) contenant au moins un gaz,
**caractérisé en ce que** le taux de remplissage, qui est le rapport entre le volume total des granulats (71), somme des volumes élémentaires des granulats (71), et le volume de la cavité interne (6), est au moins égal à 0,8.

2. Ensemble monté (1, 5, 7) selon la revendication 1, **caractérisé en ce que** le taux de remplissage est au moins égal à 0,95.

3. Ensemble monté (1, 5, 7) selon l'une des revendications 1 ou 2, **caractérisé en ce que** les granulats (71) du composant de remplissage granulaire (7) sont constitués d'un matériau élastique.

4. Ensemble monté (1, 5, 7) selon la revendication 3, **caractérisé en ce que** le matériau élastique constitutif des granulats (71) du composant de remplissage granulaire (7) a un module d'élasticité à 10% d'allongement au plus égal à 100 MPa.

5. Ensemble monté (1, 5, 7) selon l'une quelconque des revendications 1 à 4, **caractérisé en ce que** les granulats (71) du composant de remplissage granulaire (7) sont constitués d'un matériau polymérique.

6. Ensemble monté (1, 5, 7) selon l'une quelconque des revendications 1 à 5, **caractérisé en ce que** les interstices (72) entre les granulats (71) contiennent une poudre conductrice de chaleur, ayant une conductivité thermique au moins égale 50 W/m.K, permettant de répartir la chaleur dissipée dans le composant de remplissage granulaire (7).

7. Ensemble monté (1, 5, 7) selon l'une quelconque des revendications 1 à 5, **caractérisé en ce que** les interstices (72) entre les granulats (71) contiennent une poudre coopérant avec les granulats (71), pour créer des liaisons chimiques permettant de limiter la mobilité relative des granulats (71) entre eux.

8. Ensemble monté (1, 5, 7) selon l'une quelconque des revendications 1 à 5, **caractérisé en ce que** les interstices (72) entre les granulats (71) contiennent un produit visqueux ayant une viscosité élevée.

9. Ensemble monté (1, 5, 7) selon l'une des revendications 1 ou 2, **caractérisé en ce que** les granulats (71) du composant de remplissage granulaire (7) sont constitués d'un matériau indéformable.

10. Ensemble monté (1, 5, 7) selon la revendication 9, **caractérisé en ce que** les granulats (71) du composant de remplissage granulaire (7) sont constitués de sable.

11. Ensemble monté (1, 5, 7) selon l'une quelconque des revendications 1 à 10, la jante (5) étant une jante étanche, **caractérisé en ce que** les interstices (72) entre les granulats (71) contiennent un gaz dont la pression est supérieure à la pression atmosphérique.

12. Ensemble monté (1, 5, 7) selon l'une quelconque des revendications 1 à 11, la jante (5) étant une jante étanche, **caractérisé en ce que** les interstices (72) entre les granulats (71) contiennent un liquide, permettant de répartir la chaleur dissipée dans le composant de remplissage granulaire (7) par brassage des granulats (71) en utilisation.

13. Procédé de réalisation d'un ensemble monté (1, 5, 7) selon l'une quelconque des revendications 1 à 5, 9 ou 10 comprenant les étapes suivantes:
a) Mise en place d'une virole cylindrique (8) de diamètre égal au diamètre de la jante, de façon à obturer la cavité interne (6) du pneumatique (1), remplissage de la cavité interne (6) du pneumatique (1) par le composant de remplissage granulaire (7) à l'aide d'un moyen de remplissage (9), et compactage des granulats (71), de façon à obtenir le taux de remplissage visé et à constituer un ensemble intermédiaire (1, 7, 8) comprenant le pneumatique (1), rempli par le composant de remplissage granulaire (7), et la virole (8).
b) Mise en place de l'ensemble intermédiaire (1, 7, 8) sur un bâti de transfert comprenant un moyen de transfert (10) et la jante (5) sur laquelle doit être monté le pneumatique (1), rempli par le composant de remplissage granulaire (7).
c) Transfert du pneumatique (1), rempli par le composant de remplissage granulaire (7), de la virole (8) sur la jante (5), par application d'un effort parallèle à l'axe de révolution du pneumatique par le moyen de transfert (10), de façon à constituer l'ensemble monté (1, 5, 7).

## Patentansprüche

1. Montierte Baugruppe (1, 5, 7) für ein Förderfahrzeug, das dazu bestimmt ist, schwere Lasten auf kleinen Entfernungen und mit geringen Geschwindigkeiten zu transportieren, die Folgendes umfasst:
- einen Reifen (1), der auf eine Felge (5) montiert ist,
- wobei der Reifen eine Lauffläche (2) umfasst, die dazu bestimmt ist, mit einem Boden in Berührung zu kommen, zwei Flanken (3), die sich radial zu dem Inneren ausgehend von den Enden der Lauffläche (2) erstrecken, zwei Wülste (4), die die Flanken (3) radial zu dem Inneren und in Berührung mit der Felge (5) verlängern,
- wobei die Lauffläche (2), die zwei Flanken (3), die zwei Wülste (4) und die Felge (5) einen Innenhohlraum (6) abgrenzen,
- wobei der Innenhohlraum (6) einen Füllbestandteil (7) enthält, der aus mindestens einem nicht komprimierbaren festen Element besteht,
wobei der Füllbestandteil (7) ein körniger Bestandteil ist, der aus Granulaten (71) besteht, die mindestens zum Teil voneinander durch Zwischenräume (72), die mindestens ein Gas enthalten, getrennt sind,
**dadurch gekennzeichnet, dass** die Füllrate, die das Verhältnis zwischen dem Gesamtvolumen der Granulate (71), Summe der elementaren Volumen der Granulate (71), und dem Volumen des Innenhohlraums (6) ist, mindestens gleich 0,8 ist.

2. Montierte Baugruppe (1, 5, 7) nach Anspruch 1, **dadurch gekennzeichnet, dass** die Füllrate mindestens gleich 0,95 ist.

3. Montierte Baugruppe (1, 5, 7) nach einem der Ansprüche 1 oder 2, **dadurch gekennzeichnet, dass** die Granulate (71) des körnigen Füllbestandteils (7) aus einem elastischen Werkstoff bestehen.

4. Montierte Baugruppe (1, 5, 7) nach Anspruch 3, **dadurch gekennzeichnet, dass** der elastische Werkstoff, der die Granulate (71) des körnigen Füllbestandteils (7) bildet, ein Elastizitätsmodul bei 10 % Dehnung maximal gleich 100 MPa hat.

5. Montierte Baugruppe (1, 5, 7) nach einem der Ansprüche 1 bis 4, **dadurch gekennzeichnet, dass** die Granulate (71) des Füllbestandteils (7) aus Polymerwerkstoff bestehen.

6. Montierte Baugruppe (1, 5, 7) nach einem der Ansprüche 1 bis 5, **dadurch gekennzeichnet, dass** die Zwischenräume (72) zwischen den Granulaten (71) Wärme leitendes Pulver enthalten, das eine Wärmeleitfähigkeit mindestens gleich 50 W/m.K hat, die es erlaubt, die Wärme, die in den körnigen Füllbestandteil (7) abgeleitet wird, zu verteilen.

7. Montierte Baugruppe (1, 5, 7) nach einem der Ansprüche 1 bis 5, **dadurch gekennzeichnet, dass** die Zwischenräume (72) zwischen den Granulaten (71) ein Pulver enthalten, das mit den Granulaten (71) zusammenwirkt, um chemische Verbindungen zu schaffen, die es erlauben, die relative Mobilität der Granulate (71) untereinander zu beschränken.

8. Montierte Baugruppe (1, 5, 7) nach einem der Ansprüche 1 bis 5, **dadurch gekennzeichnet, dass** die Zwischenräume (72) zwischen den Granulaten (71) ein viskoses Produkt enthalten, das eine hohe Viskosität hat.

9. Montierte Baugruppe (1, 5, 7) nach einem der Ansprüche 1 oder 2, **dadurch gekennzeichnet, dass** die Granulate (71) des körnigen Füllbestandteils (7) aus nicht verformbarem Werkstoff bestehen.

10. Montierte Baugruppe (1, 5, 7) nach Anspruch 9, **dadurch gekennzeichnet, dass** die Granulate (71) des körnigen Füllbestandteils (7) aus Sand bestehen.

11. Montierte Baugruppe (1, 5, 7) nach einem der Ansprüche 1 bis 10, wobei die Felge (5) eine dichte Felge ist, **dadurch gekennzeichnet, dass** die Zwischenräume (72) zwischen den Granulaten (71) ein Gas enthalten, dessen Druck höher ist als der Luftdruck.

12. Montierte Baugruppe (1, 5, 7) nach einem der Ansprüche 1 bis 11, wobei die Felge (5) eine dichte Felge ist, **dadurch gekennzeichnet, dass** die Zwischenräume (72) zwischen den Granulaten (71) eine Flüssigkeit enthalten, die es erlaubt, die in den körnigen Füllbestandteil (7) abgeleitete Wärme durch Mischen der Granulate (71) beim Gebrauch zu verteilen.

13. Herstellungsverfahren einer montierten Baugruppe (1, 5, 7) nach einem der Ansprüche 1 bis 5, 9 oder 10, das die folgenden Schritte umfasst:
a) Anbringen eines zylindrischen Mantelschusses (8) mit Durchmesser gleich dem Durchmesser der Felge derart, dass der Innenhohlraum (6) des Reifens (1) verschlossen ist, Füllen des Innenhohlraums (6) des Reifens (1) mit dem körnigen Füllbestandteil (7) mit Hilfe eines Füllmittels (9), und Kompaktieren der Granulate (71) derart, dass die beabsichtigte Füllrate erhalten wird und eine Zwischeneinheit (1, 7, 8) gebildet wird, die den Reifen (1), der mit dem körnigen Füllbestandteil (7) gefüllt ist, und den Mantelschuss (8) umfasst.
b) Anbringen der Zwischeneinheit (1, 7, 8) auf einem Transferrahmen, der ein Transfermittel (10) und die Felge (5), auf die der Reifen (1) zu montieren ist, gefüllt mit dem körnigen Füllbestandteil (7) umfasst.
c) Transfer des Reifens (1), der mit dem körnigen Füllbestandteil (7) gefüllt ist, des Mantelschusses (8) auf die Felge (5) durch Anwenden einer Kraft, die zu der Rotationsachse des Reifens parallel ist, durch das Transfermittel (10) derart, dass die montierte Baugruppe (1, 5, 7) gebildet wird.

## Claims

1. Mounted assembly (1, 5, 7) for a handling vehicle, designed to transport heavy loads, over short distances and at low speeds, comprising:
- a tyre (1) mounted on a rim (5),
- the tyre comprising a tread (2) designed to come into contact with a ground, two sidewalls (3) extending radially inwards from the ends of the tread (2), and two beads (4) extending the sidewalls (2) radially inwards and in contact with the rim (5),
- the tread (2), the two sidewalls (3), the two beads (4) and the rim (5) delimiting an internal cavity (6),
- the internal cavity (6) containing a filling component (7) consisting of at least one incompressible solid element, the filling component (7) being a granular filling component consisting of granules (71) at least partly separated from one another by interstices (72) containing at least one gas, **characterized in that** the fill rate, which is the ratio between the total volume of the granules (71), the total of the elementary volumes of the granules (71), and the volume of the internal cavity (6), is at least equal to 0.8.

2. Mounted assembly (1, 5, 7) according to Claim 1, **characterized in that** the fill rate is at least equal to 0.95.

3. Mounted assembly (1, 5, 7) according to either of Claims 1 and 2, **characterized in that** the granules (71) of the granular filling component (7) consist of an elastic material.

4. Mounted assembly (1, 5, 7) according to Claim 3, **characterized in that** the elastic material forming the granules (71) of the granular filling component (7) has a modulus of elasticity at 10% of elongation at most equal to 100 MPa.

5. Mounted assembly (1, 5, 7) according to any one of Claims 1 to 4, **characterized in that** the granules (71) of the granular filling component (7) consist of a polymeric material.

6. Mounted assembly (1, 5, 7) according to any one of Claims 1 to 5, **characterized in that** the interstices (72) between the granules (71) contain a heat-conducting powder, having a thermal conductivity at least equal to 50 W/m.K, making it possible to distribute the dissipated heat in the granular filling component (7).

7. Mounted assembly (1, 5, 7) according to any one of Claims 1 to 5, **characterized in that** the interstices (72) between the granules (71) contain a powder interacting with the granules (71), in order to create chemical links making it possible to limit the relative mutual mobility of the granules (71).

8. Mounted assembly (1, 5, 7) according to any one of Claims 1 to 5, **characterized in that** the interstices (72) between the granules (71) contain a viscous product having a high viscosity.

9. Mounted assembly (1, 5, 7) according to either of Claims 1 and 2, **characterized in that** the granules (71) of the granular filling component (7) consist of an undeformable material.

10. Mounted assembly (1, 5, 7) according to Claim 9, **characterized in that** the granules (71) of the granular filling component (7) consist of sand.

11. Mounted assembly (1, 5, 7) according to any one of Claims 1 to 10, the rim (5) being a sealed rim, **characterized in that** the interstices (72) between the granules (71) contain a gas of which the pressure is higher than atmospheric pressure.

12. Mounted assembly (1, 5, 7) according to any one of Claims 1 to 11, the rim (5) being a sealed rim, **characterized in that** the interstices (72) between the granules (71) contain a liquid, making it possible to distribute the dissipated heat in the granular filling component (7) by stirring the granules (71) during use.

13. Method for producing a mounted assembly (1, 5, 7) according to any one of Claims 1 to 5, 9 or 10, comprising the following steps:
a) installing a cylindrical shroud (8) with a diameter equal to the diameter of the rim, so as to close off the internal cavity (6) of the tyre (1), filling the internal cavity (6) of the tyre (1) with the granular filling component (7) with the aid of a filling means (9), and compacting the granules (71), so as to obtain the intended fill rate and to form an intermediate assembly (1, 7, 8) comprising the tyre (1), filled with the granular filling component (7), and the shroud (8).
b) installing the intermediate assembly (1, 7, 8) on a transfer frame comprising a transfer means (10) and the rim (5) onto which the tyre (1), filled with the granular filling component (7), is to be mounted.
c) transferring the tyre (1), filled with the granular filling component (7), from the shroud (8) onto the rim (5), by application of a force parallel to the axis of revolution of the tyre by the transfer means (10), so as to form the mounted assembly (1, 5, 7).
